# EUROPÄISCHE PATENTSCHRIFT

(11) **EP 4 348 085 B1**
(45) Veröffentlichungstag und Bekanntmachung des Hinweises auf die Patenterteilung: **17.12.2025**
(21) Anmeldenummer: 22730197.5
(22) Anmeldetag: 20.05.2022
(51) Int. Cl.: F16H 61/4148, F16H 61/4192, F16H 61/421, F16H 61/431

(54) **HYDROSTATISCHER ANTRIEB, VERFAHREN ZUR STEUERUNG DES HYDROSTATISCHEN ANTRIEBS**
HYDROSTATIC DRIVE AND METHOD FOR CONTROLLING SAID HYDROSTATIC DRIVE
ENTRAÎNEMENT HYDROSTATIQUE ET PROCÉDÉ DE COMMANDE DUDIT ENTRAÎNEMENT HYDROSTATIQUE

(30) Priorität: 25.05.2021 DE 102021205293
(43) Veröffentlichungstag der Anmeldung: 10.04.2024
(73) Patentinhaber: Robert Bosch GmbH, 70442 Stuttgart (DE)
(72) Erfinder: WANG, Ximing, 89233 Neu-Ulm (DE); TETIK, Salih, 89278 Nersingen (DE); LINDER, Lukas, 89129 Langenau (DE)
(86) Internationale Anmeldenummer: PCT/EP2022/063800
(87) Internationale Veröffentlichungsnummer: WO 2022/248371

(56) Entgegenhaltungen:
- WO-A2-2011/133344
- JP-A- S 643 303

## Beschreibung

Die Erfindung betrifft einen hydrostatischen Antrieb gemäß dem Oberbegriff des Anspruchs 1, sowie ein Verfahren zu dessen Steuerung gemäß Anspruch 11.

Ein gattungsgemäßer Antrieb (siehe JP S64 3033 A) hat zwei in offenem hydraulischen Kreis verbundene Hydromaschinen mit durch Null verstellbarem Verdrängungsvolumen. Eine erste der Hydromaschinen ist mit einer Antriebmaschine, beispielsweise einer Verbrennungskraft- oder einer Elektromaschine, die zweite mit einem Abtrieb, beispielsweise einem Getriebe oder einer Achse koppelbar. Der Antrieb ist beispielsweise ein Fahrantrieb für eine mobile Arbeitsmaschine.

Die Ansteuerung erfolgt über eine Steuereinheit elektrisch/elektronisch vorzugsweise derart, dass der Arbeitsdruck des Antriebs über die Verstellung des Verdrängungsvolumens der ersten Hydromaschine und das Abtriebs-Drehmoment über die Verstellung der zweiten Hydromaschine geregelt werden.

Kommt es zu einem elektrischen Fehler in der Wirkkette von der Steuereinheit zur jeweiligen elektrohydraulischen Verstelleinheit, kann dies Schäden an der Hydromaschine, dem hydraulischen Kreis zur Folge haben, bis hin zu einem Ausfall des Antriebes und der davon angetriebenen Maschine.

Dem gegenüber liegt der Erfindung die Aufgabe zu Grunde, einen hydrostatischen Antrieb zu schaffen, der im Fehlerfall in einen sichereren Betriebszustand steuerbar ist. Eine weitere Aufgabe ist es, ein Verfahren zur Steuerung des Antriebes zu schaffen, über das dieser im Fehlerfall in einen sichereren Betriebszustand steuerbar ist.

Die erste Aufgabe wird gelöst durch einen hydrostatischen Antrieb mit den Merkmalen des Anspruchs 1, die zweite durch ein Verfahren mit den Merkmalen des Anspruchs 11.

Vorteilhafte Weiterbildungen der Erfindungen sind in den jeweils abhängigen Ansprüchen beschrieben.

Ein hydrostatischer Antrieb, insbesondere Fahrantrieb einer mobilen Arbeitsmaschine, hat Hydromaschinen, von denen wenigstens eine mit einer Antriebsmaschine und wenigstens eine andere mit einem Abtrieb koppelbar, insbesondere gekoppelt ist. Sie sind, insbesondere in offenem hydraulischem Kreis, einerseits über eine Arbeitsleitung und andererseits mit einer Druckmittelsenke, insbesondere einem Tank, fluidisch verbunden. Beide können je nach Anforderung im Pumpenbetrieb und im Motorbetrieb arbeiten. Insbesondere sind jeweilige Druckmittelanschlüsse der Hydromaschinen für den Niederdruck und die Arbeitsleitung dauerhaft, das heißt, die Hydromaschinen sind insbesondere nicht für einen Druckseitenwechsel konzipiert. Für eine effiziente, bedarfsgerechte Druckmittelversorgung sind sie jeweils mit verstellbarem Verdrängungsvolumen ausgestaltet. Um einen Wechsel zwischen Motor- und Pumpenbetrieb, beziehungsweise einen Richtungswechsel des Drehmoments, zu ermöglichen, ist ihr Verdrängungsvolumen jeweils beidseitig von Null verstellbar. Insbesondere sind sie jeweils als Axialkolbenmaschine in Schrägscheibenbauweise mit durchschwenkbarer Schrägscheibe ausgestaltet. Zur Verstellung des Verdrängungsvolumens weisen die Hydromaschinen jeweils zumindest eine elektrohydraulische Verstelleinheit auf. Im Falle der Schrägscheibenbauweise ist die jeweilige Schrägscheibe davon angelenkt. Die jeweilige elektrohydraulische Verstelleinheit ist in eine Verstellrichtung wirksam und weist zu diesem Zweck eine elektrisch und/oder elektronisch ansteuerbare Ventileinrichtung auf, über die ein Stelldruckraum eines Stellzylinders dieser Verstelleinheit wahlweise mit der Arbeitsleitung und mit einem Niederdruck, und in Zwischenstellungen insbesondere mit beiden, verbindbar ist. Insbesondere ist eine Steuereinheit des Antriebs eingerichtet, dass über die von ihr angesteuerte Verstellung der mit der Antriebsmaschine koppelbaren Hydromaschine der Arbeitsdruck in der Arbeitsleitung regelbar und über die von ihr angesteuerte Verstellung der mit dem Abtrieb koppelbaren Hydromaschine ein Drehmoment am Abtrieb steuerbar und ein Verdrängungsvolumen der dortigen Hydromaschine regelbar ist. Insbesondere ist ein jeweiliger Ist-Wert des Arbeitsdrucks und des letztgenannten Verdrängungsvolumens erfasst und an die Steuereinheit elektronisch rückgeführt. Dieses Konzept der elektronischen Rückführung der jeweiligen Regelgröße, anstatt einer hydraulisch-mechanischen Rückführung, ist aus dem Sortiment der Anmelderin als sogenannte "Electronified Open Circuit"- oder "EOC"-Hydromaschine bekannt und ist für eine Hydropumpe beispielsweise im Datenblatt RD 30630/04.13 beschrieben. Ein Soll-Drehmoment am Abtrieb ist insbesondere von einer übergeordneten Antriebsstrategie, insbesondere Fahrstrategie, an die Steuereinheit übergebbar. Ein derartiger Antrieb ist insbesondere als sekundärgeregelter Antrieb in offenem Hydraulik-Kreislauf bekannt. Erfindungsgemäß ist eine Steuereinheit des Antriebs derart eingerichtet, dass über sie fehlerbehaftete der elektrohydraulischen Verstelleinheiten ermittelbar sind und eine nicht-fehlerbehaftete der Hydromaschinen, insbesondere deren elektrohydraulische Verstelleinheit, derart ansteuerbar ist, dass ein Drehmoment der Hydromaschine mit fehlerbehafteter elektrohydraulischer Verstelleinheit in Richtung Null folgt.

So kann im Fehlerfall, sofern wenigstens eine der elektrohydraulischen Verstelleinheiten nicht-fehlerbehaftet ist, das Verstellverhalten der fehlerbehafteten Hydromaschine über die Ansteuerung der nicht-fehlerbehaftet Hydromaschine beeinflusst werden, sodass kritische Zustände, insbesondere aufgrund eines zu hohen oder unkontrollierten Drehmoments oder einer zu hohen oder unkontrollierten Drehzahl verhindert sind. Es ist so ein hydrostatischer Antrieb geschaffen, der im insbesondere elektrischen und/oder elektronischen Fehlerfall in einen sichereren Betriebszustand steuerbar ist. So kann die Beschädigung des Antriebes, beispielsweise, wenn im kritischen Zustand Späne in den hydraulischen Kreis gelangen sollten, was bis zu einem Ausfall der Maschine führen kann, vermieden werden. Besonders vorteilhaft ist, dass es sich dabei lediglich um eine Eigenschaft der Steuereinheit handelt. Herkömmliche Antriebe können so mit wenig Aufwand durch erfindungsgemäße Anpassung ihrer Steuereinheit oder durch deren einfachen Wechsel angepasst werden, ohne dass zusätzliche hydraulische oder maschinelle Komponenten, beispielsweise Zusatzventile zur Absicherung, zu installieren sind. Die Anpassung erfolgt lediglich seitens einer Software und/oder Hardware der Steuereinheit.

In einer Weiterbildung weist wenigstens eine der Hydromaschinen eine elektrounabhängige Verstelleinheit auf, die der elektrohydraulischen Verstelleinheit in anderer Verstellrichtung entgegenwirkt. Im einfachen Fall ist die elektrounabhängige Verstelleinheit beispielsweise mittels einer Verdrillung einer Steuerscheibe realisiert, aus der Triebwerkskräfte resultieren, die die Verstellung in die entgegengesetzte Verstellrichtung der Hydromaschine bewirken.

Ergänzend oder alternativ zu dieser Verdrillung kann als elektrounabhängige Verstelleinheit eine mechanische Verstelleinheit, beispielsweise eine Feder, und/oder eine hydraulische Verstelleinheit, beispielsweise ein Gegen- oder Rückstellzylinder vorgesehen sein.

Ist die jeweilige Hydromaschine als Axialkolbenmaschine in Schrägscheibenbauweise ausgestaltet, so ist ihre Schrägscheibe in einer bevorzugten Weiterbildung von der elektrohydraulischen und von der elektrounabhängigen Verstelleinheit angelenkt. Auf eine Schwenkachse der Schrägscheibe bezogen ist diese von den Verstelleinheiten insbesondere diametral oder in "Boxeranordnung" angelenkt.

Ein Stelldruckraum eines Stellzylinders der in entgegengesetzter Verstellrichtung wirksamen, elektrounabhängigen hydraulischen Verstelleinheit ist in einer Weiterbildung dauerhaft mit der Arbeitsleitung verbunden.

In einer Weiterbildung wirken die Verstelleinheiten der jeweiligen Hydromaschine derart zusammen, dass in stromlosem Zustand, insbesondere wenn die Stromversorgung der elektrisch und/oder elektronisch ansteuerbaren Ventileinrichtung unbeabsichtigt entfällt/ausfällt, die elektrohydraulische Verstelleinheit das Verdrängungsvolumen oberhalb eines vorbestimmten Arbeitsdrucks der Arbeitsleitung in Richtung eines Null-Verdrängungsvolumens und darüber hinaus in Richtung eines Maximal-Verdrängungsvolumens (beispielsweise - Vgmax) stellt. Stromlos und unterhalb des vorbestimmten Arbeitsdrucks stellt die andere, elektrounabhängige Verstelleinheit das Verdrängungsvolumen in Richtung des entgegengesetzten Maximal-Verdrängungsvolumens (beispielsweise +Vgmax).

Die Steuereinheit weist in einer Weiterbildung für den Fehlerfall eine Ersatzregeleinrichtung auf, die sich von einer für den bestimmungsgemäßen und fehlerfreien Betrieb vorgesehenen Regeleinrichtung unterscheidet.

Dabei sind insbesondere drei Fehlerfälle von Interesse. Ein Fehlerfall an der mit der Antriebmaschine gekoppelten Hydromaschine oder ein Fehlerfall an der mit dem Abtrieb gekoppelten Hydromaschine oder ein Fehlerfall an beiden Hydromaschinen gleichzeitig. Jedem der Fehlerfälle ist wenigstens eine der Ersatzregeleinrichtungen oder eine Kombination daraus zugeordnet.

Im Fehlerfall der abtriebsseitigen Hydromaschine ("Hydromotor") weist die Ersatzregeleinrichtung einen Ersatzeingangswert für die antriebsmaschinenseitige Hydromaschine ("Hydropumpe") auf, der dem Ist-Verdrängungsvolumen der abtriebsseitigen Hydromaschine entspricht. Der Ersatzeingangswert ist beispielsweise ein erfasster Schwenkwinkel der Schrägscheibe oder ein erfasster Stellweg einer der Verstelleinheiten der abtriebsseitigen Hydromaschine. Über die Ersatzregeleinrichtung ist dann durch Ansteuerung der elektrohydraulischen Verstelleinheit der antriebsmaschinenseitigen Hydromaschine ein Arbeitsruck der Arbeitsleitung derart regelbar, dass der Ersatzeingangswert, insbesondere der Schwenkwinkel oder Stellweg der fehlerbehafteten, abtriebsseitigen Hydromaschine, auf einen Wert folgt, der einem Null-Verdrängungsvolumen dieser Hydromaschine entspricht, also beispielsweise auf einen Schwenkwinkel von 0°.

Im Fehlerfall der antriebsmaschinenseitigen Hydromaschine ("Hydropumpe") weist die Ersatzregeleinrichtung als Ersatzeingangswert einen Ersatz-Sollwert für das angeforderte Verdrängungsvolumen der abtriebsseitigen Hydromaschine ("Hydromotor") auf. Der Ersatz-Sollwert ist dann konstant Null, unabhängig davon, welches Drehmoment angefordert wird. So wird das angeforderte Drehmoment am Abtrieb im genannten Fehlerfall ignoriert oder zu Null überschrieben.

Die jeweilige elektrohydraulische Verstelleinheit hat als Ventileinrichtung vorzugsweise ein elektromagnetisch betätigbares Ventil, über das ein Stelldruckraum eines Verstellzylinders der elektrohydraulischen Verstelleinheit unbetätigt mit der Arbeitsleitung und betätigt mit einer Druckmittelsenke verbindbar ist.

Die der elektrohydraulischen Verstelleinheit entgegenwirkende, jeweilige hydraulische Verstelleinheit hat einen Verstellzylinder mit einem Stelldruckraum, der mit der Arbeitsleitung des Kreises gedrosselt oder ungedrosselt druckmittelverbunden ist.

In einer bevorzugten Weiterbildung ist die Steuereinheit derart eingerichtet, dass die nicht-fehlerbehaftete der Hydromaschinen derart ansteuerbar ist, dass das Verdrängungsvolumen der Hydromaschine mit fehlerbehafteter elektrohydraulischer Verstelleinheit in Richtung Null folgt. Da das Drehmoment am Abtrieb ein Produkt aus Arbeitsdruck und Verdrängungsvolumen ist, folgt demnach erfindungsgemäß das Drehmoment am Abtrieb in Richtung Null.

Um die Hydromaschinen und den Antrieb gegen Überlast zu schützen, ist in einer Weiterbildung die Arbeitsleitung mit einer Druckbegrenzungseinrichtung, insbesondere einem Druckbegrenzungsventil, verbunden.

Als besonders variabel im Betrieb erweist sich die Druckbegrenzungseinrichtung, wenn sie von der Steuereinheit ansteuerbar ausgestaltet ist und die Steuereinheit eingerichtet ist, dass über sie ein Grenzdruck der Druckbegrenzungseinrichtung bedarfsgerecht, insbesondere am fehlerfreien Betrieb und am fehlerbehafteten Betrieb orientiert, einstellbar ist.

In einer Weiterbildung ist die Steuereinheit eingerichtet, einen Grenzdruck der Druckbegrenzungseinrichtung im fehlerfreien Betrieb auf einen bestimmungsgemäßen Wert und in Abhängigkeit des Fehlerfalls auf einen Wert unterhalb davon einzustellen. Auf diese Weise kann im Fehlerfall die vom Arbeitsdruck abhängige Dynamik der Verstellung verringert werden. In Folge sind Druck-Schwingungen im Fehlerfall reduzierbar.

Um im Pumpenbetrieb der jeweiligen Hydromaschine ein möglichst druckverlustfreies Ansaugen und im Motorbetrieb einen notwendigen Gegendruck zu ermöglichen, ist in einer **Weiterbildung** in einem Druckmittelströmungspfad wenigstens einer der Hydromaschinen zur Druckmittelsenke eine von der Steuereinheit ansteuerbare Drosseleinrichtung mit verstellbarem Drosselquerschnitt vorgesehen.

In einer Weiterbildung ist die Steuereinheit eingerichtet, dass über sie in einem Motorbetrieb der betreffenden Hydromaschine der Drosselquerschnitt verringerbar und in einem Pumpenbetrieb demgegenüber vergrößerbar ist. Im einfachsten Fall kann die Drosseleinrichtung als ein entsperrbares, in Richtung Hydromaschine öffnendes Rückschlagventil ausgestaltet sein.

In einer Weiterbildung ist die Steuereinheit derart ausgebildet, dass über sie ein Wechsel einer jeweiligen Hydromaschine vom Motor- in den Pumpenbetrieb und/oder ein Null-Durchgang ihres Verdrängungsvolumens erfassbar oder sogar prädizierbar ist.

Wenn nach dem Wechsel die Saugseite die Niederdruckseite ist, was beim Wechsel vom Motor- in den Pumpenbetrieb der Fall ist, stellt der Wechsel oder Null-Durchgang einen kritischen Zustand dar. Falls er mit zu großer Dynamik erfolgt, droht Kavitation, falls das Druckmittel auf der Saugseite zu stark beschleunigt wird. Die Erfassung oder Prädiktion des Wechsels/Null-Durchgangs ist daher eine vorteilhafte Eigenschaft der Steuereinheit, um Gegenmaßnahmen einleiten zu können und Kavitation zu verhindern.

In einer Weiterbildung ist die Steuereinheit insbesondere deshalb eingerichtet, dass über sie eine Dynamik des Wechsels und/oder des Null-Durchgangs, insbesondere die Dynamik der Verstellung derjenigen Hydromaschine, die im Pumpenbetrieb ist oder in diesen wechselt, reduzierbar und/oder begrenzbar ist.

Da eine kritische Dynamik, die nicht überschritten werden sollte, nicht konstant ist, sondern von der Drehzahl und vom Verdrängungsvolumen abhängig ist, erweist sich eine Weiterbildung als vorteilhaft, bei der die Steuereinheit eingerichtet ist, dass über sie die Dynamik in Abhängigkeit der Drehzahl und/oder des Verdrängungsvolumens reduzier- und/oder begrenzbar ist.

Vorteilhafter Weise ist hierzu in der Steuereinheit ein Kennfeld oder dergleichen abgelegt, über das diese Abhängigkeit abgebildet ist.

Selbstverständlich kann der Antrieb wenigstens einem hydrostatischen Aktor, insbesondere Arbeitsverbraucher, aufweisen, der fluidisch über die Arbeitsleitung des offenen Kreises mit Druckmittel versorgbar ist. Um dessen lastdruckunabhängige Steuerung zu ermöglichen, ist er mit der Arbeitsleitung vorzugsweise über eine Zumessblende fluidisch verbunden, mit der eine Druckwaage in Reihe geschaltet ist, über die eine Druckdifferenz über die Zumessblende regelbar ist, was als LS- oder LUDV-Steuerung bekannt ist.

Ein Verfahren zur Steuerung eines Antriebes, der gemäß wenigstens einem Aspekt der vorangegangenen Beschreibung ausgestaltet ist, hat einen Schritt "Ansteuern der elektrohydraulischen Verstelleinheiten der Hydromaschinen, über die Steuereinheit". Wie oben dargelegt, erfolgt diese Ansteuerung vorzugsweise im Sinne der genannten Sekundärregelung. Um den Antrieb im Fehlerfall in einen sichereren Betriebszustand zu steuern, sind erfindungsgemäß über die Steuereinheit zumindest folgende Schritte ausführbar: "Ermitteln der fehlerbehafteten und/oder der nicht-fehlerbehafteten, elektrohydraulischen Verstelleinheiten über die Steuereinheit" und "Ansteuern wenigstens einer nicht-fehlerbehafteten der elektrohydraulischen Verstelleinheiten über die Steuereinheit derart, dass ein Drehmoment der Hydromaschine mit der fehlerbehafteten elektrohydraulischen Verstelleinheit sinkt, insbesondere auf oder zumindest gegen Null".

Auf diese Weise ist ein Verfahren bereitgestellt, über das der hydrostatische Antrieb im Fehlerfall mit geringem Aufwand in einen sichereren Betriebszustand steuerbar ist.

Um die Dynamik der Verstellung beeinflussen zu können und wie oben dargelegt insbesondere Druckschwingungen zu dämpfen und/oder Kavitation zu verhindern, weist das Verfahren in einer Weiterbildung den Schritt "Ansteuern der Druckbegrenzungseinrichtung über die Steuereinheit derart, dass ein Grenzdruck der Druckbegrenzungseinrichtung auf einen Wert unterhalb eines bestimmungsgemäßen Grenzdrucks eingestellt wird" auf.

In einer Variante erfolgt dieser Schritt bereits, wenn nur eine der elektrohydraulischen Verstelleinheiten fehlerbehaftet ist, oder er erfolgt in einer anderen Variante nur dann, wenn die elektrohydraulischen Verstelleinheiten der einen und der anderen Hydromaschine, insbesondere aller Hydromaschinen des Kreises, fehlerbehaftet sind.

Um wie oben dargelegt Gegenmaßnahmen einleiten zu können, die den sicheren Betrieb des Antriebes ermöglichen, weist in einer Weiterbildung das Verfahren den Schritt "Prädizieren und/oder Erfassen eines Wechsels der Hydromaschinen von einem Motorbetrieb in den Pumpenbetrieb und/oder eines Nulldurchgangs der Verdrängungsvolumina" auf.

In Abhängigkeit davon können gemäß dem Verfahren folgende Schritte oder eine Untermenge davon als Gegenmaßnahme ausgeführt werden:
- "Ansteuern der elektrohydraulischen Verstelleinheit der den Wechsel aufweisenden Hydromaschine derart, dass eine Dynamik der Verstellung innerhalb eines sich um den Wechsel erstreckenden Zeit- oder Verdrängungsvolumen-Intervalls gegenüber der Dynamik außerhalb dieses Intervalls verringert ist".
- "Ansteuern der elektrohydraulischen Verstelleinheit der mit der Antriebsmaschine koppelbaren Hydromaschine derart, dass ein Arbeitsdruck der Arbeitsleitung innerhalb eines sich um den Wechsel erstreckenden Zeit-Intervalls gegenüber dem Arbeitsdruck außerhalb dieses Intervalls erhöht ist".
- "Begrenzen des Verdrängungsvolumens innerhalb eines sich um den Wechsel erstreckenden Zeit-Intervalls auf ein Limit".
- "Aufsteuern eines Drosselquerschnitts eines Druckmittelströmungspfades von der Druckmittelsenke hin zur den Wechsel aufweisenden Hydromaschine".

Vorzugsweise ist das Verfahren gemäß wenigstens einem Aspekt der vorhergehenden Beschreibung in der Steuereinheit zur Ausführung abgelegt.

Im Folgenden werden je ein Ausführungsbeispiel eines erfindungsgemäßen hydrostatischen Antriebes und eines erfindungsgemäßen Verfahrens in Zeichnungen näher erläutert. Es zeigen:
Figur 1 einen als Fahrantrieb ausgebildeten hydrostatischen Antrieb gemäß einem Ausführungsbeispiel,
Figur 2 eine im Zugbetrieb des Antriebes gemäß Figur 1 als Hydropumpe arbeitenden Hydromaschine,
Figur 3 mögliche Betriebsquadranten des Antriebes gemäß den Figuren,
Figur 4 einen bestimmungsgemäßen, fehlerfreien Betrieb des Antriebs gemäß den Figuren,
Figur 5 das Verhalten eines herkömmlichen Antriebes im elektrischen Fehlerfall der elektrohydraulischen Verstelleinheit des mit dem Abtrieb gekoppelten Hydromotors, bei Vorwärtsfahrt,
Figur 6 das Verhalten des erfindungsgemäßen Antriebes gemäß den Figuren 1 bis 4 im gleichen elektrischen Fehlerfall, bei Vorwärtsfahrt,
Figur 7 das Verhalten eines herkömmlichen Antriebes im elektrischen Fehlerfall der elektrohydraulischen Verstelleinheit des mit dem Abtrieb gekoppelten Hydromotors, bei Rückwärtsfahrt, und
Figur 8 das Verhalten des erfindungsgemäßen Antriebes gemäß den Figuren 1 bis 4 und 6 im gleichen elektrischen Fehlerfall, bei Rückwärtsfahrt.

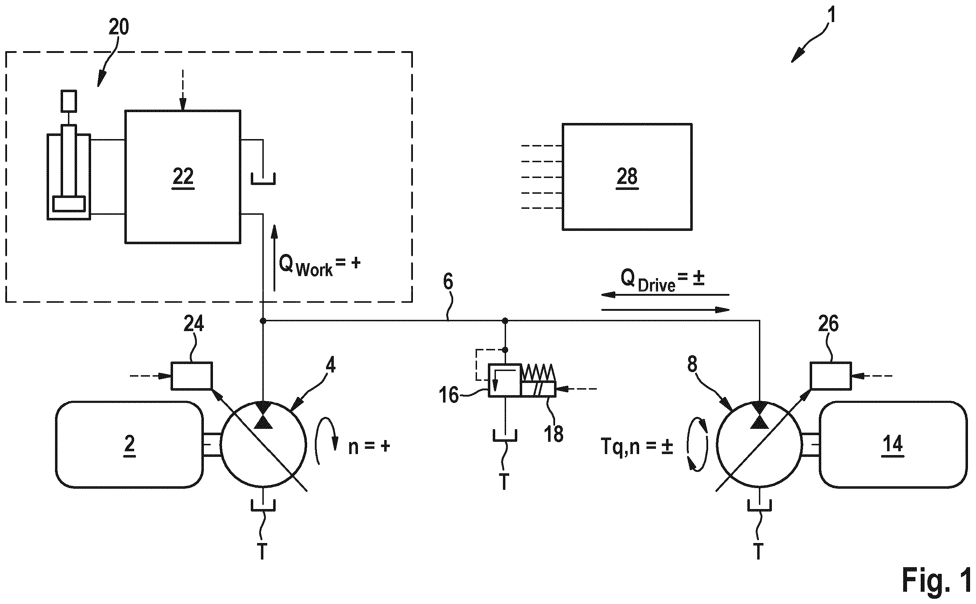

Gemäß Figur 1 hat ein als Fahrantrieb ausgebildeter hydrostatischer Antrieb 1 eine mit einer Antriebsmaschine 2 gekoppelte erste Hydromaschine 4 und eine mit dieser über eine Arbeitsleitung 6 fluidisch verbundene zweite Hydromaschine 8. Die Hydromaschinen 4, 8 haben jeweils eine elektrohydraulische Verstelleinheit 24, 26, über die sie in ihrem Verdrängungsvolumen verstellbar sind. Die zweite Hydromaschine 8 ist mit einem abtriebsseitigen Getriebe 14 gekoppelt.

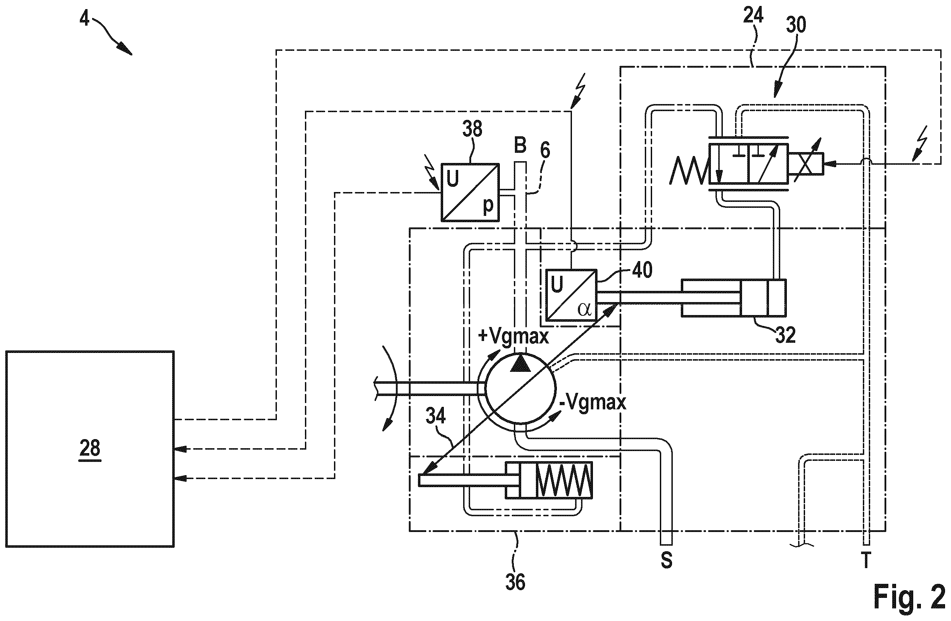

Die jeweilige Hydromaschine ist insbesondere als aus dem Sortiment der Anmelderin bekannte EOC- oder "Electronified Open Circuit"- Pumpe ausgestaltet. Der Antrieb 1 ist gegen einen Überdruck über ein Druckbegrenzungsventil 16 abgesichert, dessen Soll-Grenzdruck durch Ansteuerung eines Elektromagneten 18 einstellbar ist. Im Falle eines bestimmungsgemäß hohen Arbeitsdrucks und des damit einhergehenden hohen Soll-Grenzdrucks, ist der Elektromagnet 18 vorzugsweise einem Pilot- oder Vorsteuerventil zugeordnet, über das dann der Soll-Grenzdruck am Druckbegrenzungsventil 16 anstatt elektrisch direkt, mittelbar durch Ansteuerung des Pilotventils elektrohydraulisch einstellbar ist. Die in Figur 2 dargestellte, elektromagnetische Direktbetätigung des Druckbegrenzungsventils 16 bietet sich hingegen im Falle eines niedrigeren bestimmungsgemäßen Druckbereichs und des damit einhergehenden niedrigeren Soll-Grenzdrucks an.

Der Antrieb 1 hat einen hydrostatischen Arbeitsverbraucher 20, der im gezeigten Ausführungsbeispiel als Hydrozylinder ausgestaltet ist. Zur Druckmittelversorgung ist die Arbeitsleitungen 6 mit dem Hydrozylinder 20 über einen Steuerventilblock 22 verbunden.

In einem bestimmungsgemäßen Betrieb dreht die Antriebsmaschine 2 in konstantem Drehsinn, dass gemäß Figur 1 mit n = + symbolisiert ist.

Die Hydromaschinen 6, 8 sind beide mit verstellbarem Verdrängungsvolumen ausgestaltet. Hierzu weisen sie gemäß Figur 1 jeweils eine elektrohydraulische Verstelleinheit 24, 26 auf, von der eine das jeweilige Verdrängungsvolumen bestimmende Schrägscheibe der Hydromaschinen 6, 8 angelenkt ist.

Die Hydromaschinen 6, 8 sind mit durchschwenkbarem im Verdrängungsvolumen ausgestaltet, sodass eine Volumenstromumkehr trotz gleichbleibender Anschlussverbindung mit der Arbeitsleitung 6 und der Druckmittelsenke T, insbesondere zum Reversieren der Fahrtrichtung und zum Übergang vom Zug- in den Schleppbetrieb und umgekehrt, ermöglicht ist.

Die mit dem Reversieren und dem Übergang verbundenen Wechsel der Volumenstromrichtung und der Drehmomentrichtung am Abtrieb sind in Figur 1 skizziert.

Der Antrieb 1 hat zur Steuerung eine Steuereinheit 28, die zumindest mit den elektrohydraulischen Verstelleinheiten 24, 26, dem Elektromagneten 18 des Druckbegrenzungsventil 16 und dem Steuerventil 22 signalverbunden ist.

Figur 2 zeigt eine detailliertere Darstellung der im bestimmungsgemäßen Zugbetrieb als Hydropumpe arbeitenden ersten Hydromaschine 4. Die folgenden Betrachtungen gelten ebenso für die zweite Hydromaschine 8, mit dem Unterschied, dass deren Triebwelle mit dem Getriebe 14 und die Triebwelle der ersten Hydromaschine 4 mit der Antriebsmaschine 2 gekoppelte ist.

Gemäß Figur 2 hat die elektrohydraulische Verstelleinheit 24 ein elektromagnetisch betätigbares von der Steuereinheit 28 ansteuerbares Ventil 30 mit einem Druckanschluss, der mit der Arbeitsleitung 6 verbunden ist und mit einem Tankanschluss, der mit der Druckmittelsenke T verbunden ist. Des Weiteren hat das Ventil 30 einen Anschluss, der mit einem Stelldruckraum eines Verstellzylinders 32 der elektrohydraulischen Verstelleinheit 24 verbunden ist.

In unbestromtem Zustand ist ein Ventilkörper des Ventils 30 von einer Feder in eine Endstellung belastet, in der die Arbeitsleitung 6 mit einem Stelldruckraum des Verstellzylinders 32 verbunden ist. Bei elektromagnetischer Betätigung des Ventils 30 ist der Stelldruckraum mit dem Niederdruck T verbunden. Zwischenstellungen sind möglich, in denen der Stelldruckraum sowohl mit der Arbeitsleitung 6, als auch mit dem Niederdruck T verbunden ist.

Alternativ kann das Ventil 30 der elektrohydraulischen Verstelleinheit 24 invertiert ausgestaltet sein, das heißt, das In unbestromtem Zustand der Ventilkörper des Ventils 30 von der Feder in eine Endstellung belastet ist, in der die Druckmittelsenke T mit dem Stelldruckraum des Verstellzylinders 32 verbunden ist, wohingegen bei elektromagnetischer Betätigung des Ventils 30 der Stelldruckraum mit der Arbeitsleitung 6 verbunden ist.

Zwischenstellungen in denen der Stelldruckraum sowohl mit der Arbeitsleitung 6, als auch mit dem Niederdruck T verbunden ist, sind natürlich in beiden Varianten, beispielsweise mittels einer negativen Überdeckung oder Unterdeckung von Steuerkanten möglich.

Der Stelldruckraum des Stellzylinders 32 ist von einem Stellkolben begrenzt, von dem die Schrägscheibe 34 der ersten Hydromaschine 4 in stromlosem Zustand des Ventils 30 in Richtung eines (negativen) Maximal-Verdrängungsvolumens -Vgmax belastet ist. Der Wert - Vgmax ist im vorliegenden Ausführungsbeispiel für die im Motorbetrieb arbeitende Hydromaschine 4 so definiert, dass für eine gegebene Drehrichtung und Drehzahl der Antriebsmaschine 2 von der Hydromaschine 4 der maximale negative Fördervolumenstrom Q-max abgenommen wird.

Der Wert +Vgmax ist im vorliegenden Ausführungsbeispiel andersrum für die im Pumpenbetrieb arbeitende Hydromaschine 4 so definiert, dass für eine gegebene Drehrichtung und Drehzahl der Antriebsmaschine 2 von der Hydromaschine 4 der maximale positive Fördervolumenstrom Q+max bereitgestellt wird.

An der Schrägscheibe 34 greift in entgegengesetzter Verstellrichtungen ein federbelasteter Gegenkolben einer elektrounabhängigen, hydraulisch-mechanischen Verstelleinheit 36 an. Dessen Stelldruckraum ist permanent mit der Arbeitsleitung 6 druckmittelverbunden. Die Verstelleinheiten 24, 36 wirken in stromlosem Zustand in Abhängigkeit des Arbeitsdrucks in der Arbeitsleitung 6 derart, dass oberhalb eines systemspezifischen Arbeitsdrucks, der vom Kolbenflächenverhältnis, der Federkraft der Verstelleinheit 36 und der Drehzahl abhängig ist, die elektrohydraulische Verstelleinheit 24 das Verdrängungsvolumen Vg in Richtung negativem Maximum -Vgmax und unterhalb dieses Arbeitsdrucks die Verstelleinheit 36 das Verdrängungsvolumen Vg in Richtung positivem Maximum +Vgmax verstellt.

Der Antrieb 1 weist zur Steuerung und/oder Regelung über die Steuereinheit 28 einen mit der Arbeitsleitung 6 verbundenen Drucksensor 38 und einen mit der Schrägscheibe 34 gekoppelten Schwenkwinkelsensor 40 auf.

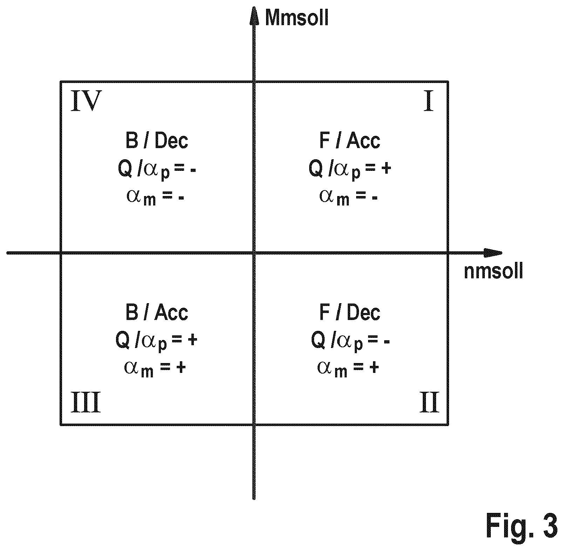

Figur 3 zeigt mögliche Betriebsquadranten des Antriebes 1. Im Fahrbetrieb werden die Hydromaschinen 4, 8 in vier Quadranten I - IV.

Der erste Betriebsquadrant I ist eine beschleunigende Vorwärtsfahrt bei positiver Soll-Motordrehzahl nm und positivem Soll-Drehmoment Mm (+) der zweiten Hydromaschine 8 ("Motor"). Hier ist der Volumenstrom Q, beziehungsweise der Pumpenschwenkwinkel ap, positiv (+) und ein Schwenkwinkel αm der zweiten Hydromaschine 8 ist negativ (-).

Der zweite Betriebsquadrant II ist die abbremsende Vorwärtsfahrt bei positiver Soll-Motordrehzahl nm (+) aber negativem (-) Soll-Drehmoment Mm (abbremsend). Der Volumenstrom Q, beziehungsweise der Pumpenschwenkwinkel aP, ist negativ (-) und der Motorschwenkwinkel αm ist positiv (+).

Der dritte Betriebsquadrant III ist eine beschleunigende Rückwärtsfahrt mit nm (-), Mm (-), Q, beziehungsweise aP (+) und αm (+).

Der vierte Betriebsquadrant IV ist eine abbremsenden Rückwärtsfahrt mit nm (-), Mm (+), Q, beziehungsweise aP (-) und αm (-).

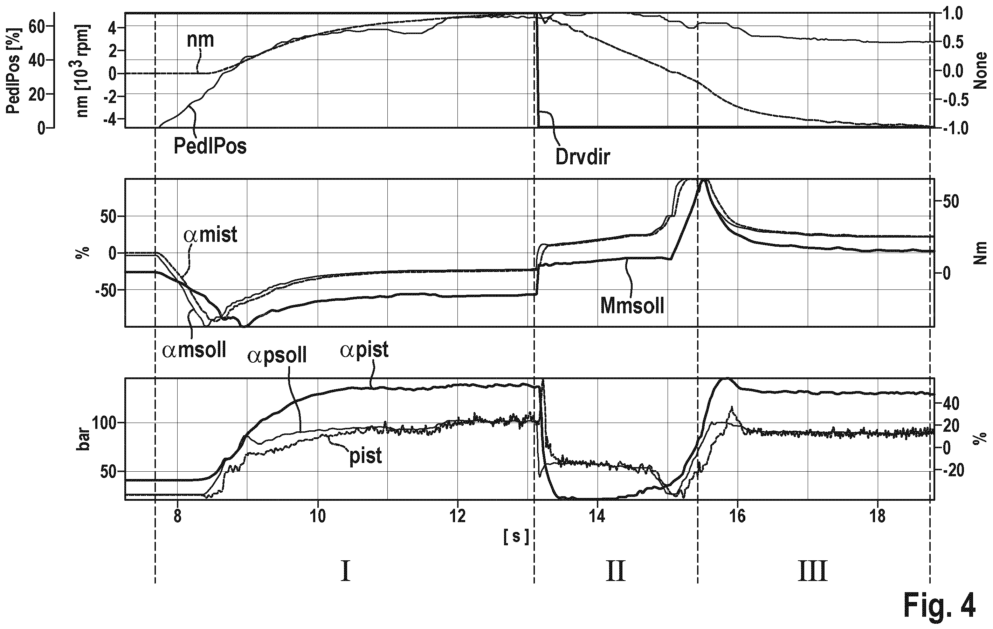

Figur 4 zeigt den fehlerfreien Normalbetrieb des Antriebs 1 anhand eines Reversiervorganges, das heißt ausgehend von der beschleunigenden Vorwärtsfahrt I wird über die abbremsende Vorwärtsfahrt II in die beschleunigenden Rückwärtsfahrt III gewechselt. Dargestellt sind oben die zeitlichen Verläufe einer Geschwindigkeitsanforderung gemäß einer Stellung PedIPos eines Fahrpedals des Antriebs 1, die Motordrehzahl nm und die Stellung Drvdir eines Fahrtrichtungswahlschalters des Antriebs 1. Mittig sind aus einer Fahrstrategie resultierende Sollwerte für den Schwenkwinkel αmsoll und für das Drehmoment Mmsoll der zweiten Hydromaschine 8, sowie deren Ist-Schwenkwinkel αmist. Unten sind der aus der Fahrstrategie resultierende Sollwert des Arbeitsdrucks psoll, dessen Ist-Wert pist und der Istwert des Schwenkwinkels der ersten Hydromaschine 4 αpist dargestellt.

Die erste Hydromaschine 4 ist über die Steuereinheit 28 und die zugeordnete Verstelleinheit 24 druckgeregelt, wobei der Arbeitsdruck p aus einem Maximalwert der Anforderungen von Fahr- und Arbeitshydraulik resultiert. Die zweite Hydromaschine 8 ist über die Steuereinheit 28 und die ihr zugeordnete Verstelleinheit 26 drehmomentgesteuert und schwenkwinkelgeregelt.

Die Problematik elektrischer Fehler, beispielsweise von Kabelbrüchen und Kurzschlüssen insbesondere am Magneten des Ventils 30 können an beiden Hydromaschinen 4, 8 mit einer gewissen Wahrscheinlichkeit auftreten. Bei herkömmlichem Antrieb, herkömmlicher Steuerung geht die Kontrolle über die Schwenkwinkel αpsoll und αmsoll verloren und abhängig vom Fahrzustand stellt sich ein jeweils unkontrollierter Schwenkwinkel αpist und αmist ein. Grundlegend sind kritische Zustände eine pulsierende Druckschwingung, ungewolltes Beschleunigen oder Abbremsen der Maschine und insbesondere eine anhaltende Kavitation. Folge solcher Ausfälle können ein Triebwerksschaden durch Kavitation oder ein hoher Schwenkwinkel bei hoher Drehzahl sein. Dabei kann das Triebwerk von der Schrägscheibe abheben und beschädigt werden. Aus einem "einfachen" elektrischen kann so ein großer wirtschaftlicher Schaden, wie beispielsweise ein Getriebeschaden oder Ventilblockschaden erwachsen.

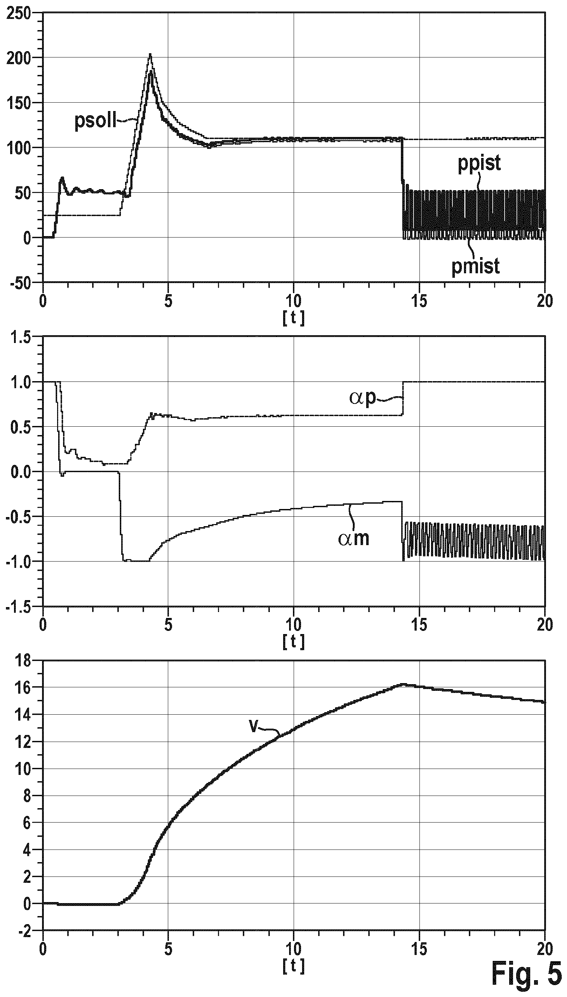

Figur 5 zeigt die Problematik herkömmlicher Antriebe bei einem Fehler am Elektromagneten des Ventils der elektrohydraulischen Verstelleinheit des mit dem Abtrieb gekoppelten Hydromotors. Dieser schwenkt im genannten Fehlerfall - aufgrund des in der Arbeitsleitung anstehenden Arbeitsdrucks p - in Richtung -Vgmax, bis sein Schluckvolumenstrom den Fördervolumenstrom der mit der Antriebsmaschine gekoppelten Hydropumpe übersteigt und somit der Druck p zusammenbricht. In diesem stromlosen und drucklosen Zustand schwenken beide Hydromaschinen in Richtung ihres positiven Maximal-Verdrängungsvolumens +Vgmax, bis sich wieder ein Druck p aufbaut. Somit ist das typische Fehlerbild eine sich einstellende Oszillation gemäß Figur 5, zwischen -Vgmax und +Vgmax, sowie zwischen null bar und einem am Druckbegrenzungsventil eingestellten Maximaldruck pmax. Dieser hochfrequente Wechsel gemäß Figur 5 kann Schäden aufgrund Kavitation und/oder Überdrehzahl hervorrufen. Darüber hinaus können sich kritische Maschinen-, insbesondere Fahrzustände einstellen, die sicherheitskritisch sein können. Beispielsweise können ungewollte Beschleunigungen auftreten, wenn die Hydropumpe noch nicht in der Sättigung und der Hydromotor bereits hin zu -Vgmax ausschwenkt.

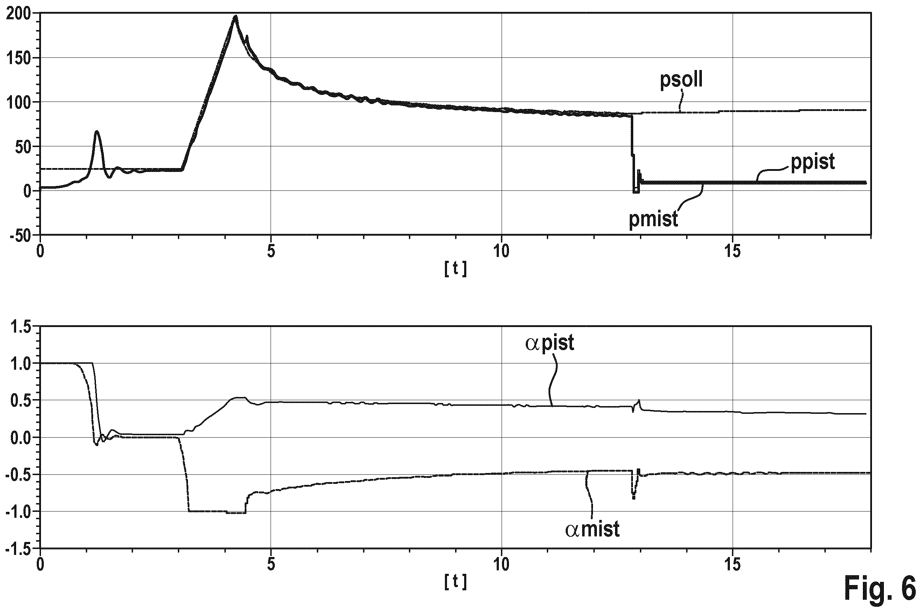

Figur 6 zeigt demgegenüber das Verhalten, das der erfindungsgemäße Fahrantrieb 1 im gleichen Fehlerfall zeigt. Gemäß Figur 6 tritt bei Sekunde 13 einer Vorwärtsfahrt der zuvor beschriebene Stromausfall am Elektromagneten des Ventils 30 der elektrohydraulischen Verstelleinheit 24 des Hydromotors 8 ein. Aufgrund des Arbeitsdrucks p in der Arbeitsleitung 6 und dem Stromausfall schwenkt der Hydromotor 8 wie im herkömmlichen Fall zunächst in Richtung -Vgmax, sodass kurzzeitig sein Schluckvolumenstrom größer ist als der Fördervolumenstrom der Hydropumpe 4. Der Arbeitsdruck p bricht ein und das Verdrängungsvolumen des Hydromotors 8 wird über die Feder seiner stromunabhängigen, hydraulischen Verstelleinheit 36 wieder in Richtung +Vgmax verstellt.

Erfindungsgemäß überwacht die Steuereinheit 28 die elektrohydraulischen Verstelleinheiten 24 der Hydromaschinen 4, 8 laufend auf ihre korrekte Funktion, insbesondere auf ihren Stromdurchgang. Insbesondere überwacht sie diesbezüglich die korrekte elektrische Funktion der Elektromagneten der Ventile 30.

Im Fehlerfall gemäß Figur ermittelt die Steuereinheit 28 den Fehlerfall am Elektromagneten des Ventils 30 des Hydromotors 8. In der Steuereinheit ist ein erfindungsgemäßes Verfahren zur Ausführung gespeichert, das für den Fehlerfall der elektrohydraulischen Verstelleinheit 24 des Hydromotors 8 eine erfindungsgemäße Ersatzregelung der anderen Hydromaschine 4 vorsieht, und umgekehrt.

Im Fehlerfall gemäß Figur 6 wird das Ventil 30 der funktionsfähigen elektrohydraulische Verstelleinheit 24 der Hydromaschine 4 dann angesteuert, dass das Abtriebs-Drehmoment der Hydromaschine 8 trotz deren ausgefallener (fehlerbehafteter) elektrohydraulischer Verstelleinheit in Richtung Null folgt. Im Prinzip wird so eine bestimmungsgemäße Regelung bei Fehlereintritt von einer Ersatzregelung ersetzt.

Im genannten Fehlerfall ändert die Steuereinheit 28 den angeforderten Soll-Arbeitsdruck oder Soll-Fahrdruck ab und steuert das Ventil 30 der elektrohydraulischen Verstelleinheit 24 der Hydropumpe 4 mit einem dem geänderten Soll entsprechenden Ansteuerstrom an. Der geänderten Soll-Arbeitsdruck ist dabei derart bemessen, dass die Schrägscheibe 34 des Hydromotors 8 aufgrund des sich an ihr ändernden Kräftegleichgewichts - bestehend aus der Stellkraft der hydraulischen Verstelleinheit, deren Feder und der aus dem Arbeitsdruck resultierenden, an ihr angreifenden Triebwerkskräfte - auf null zurückschwenkt. Durch diese Art der Ersatzregelung wird zum einem Kavitation im System vermieden und zum anderen der Schwenkwinkel des
Hydromotors 8 klein gehalten, da dieser bei zu großem Schwenkwinkel und gegebener Drehzahl einen Triebwerksschaden erleiden könnte.

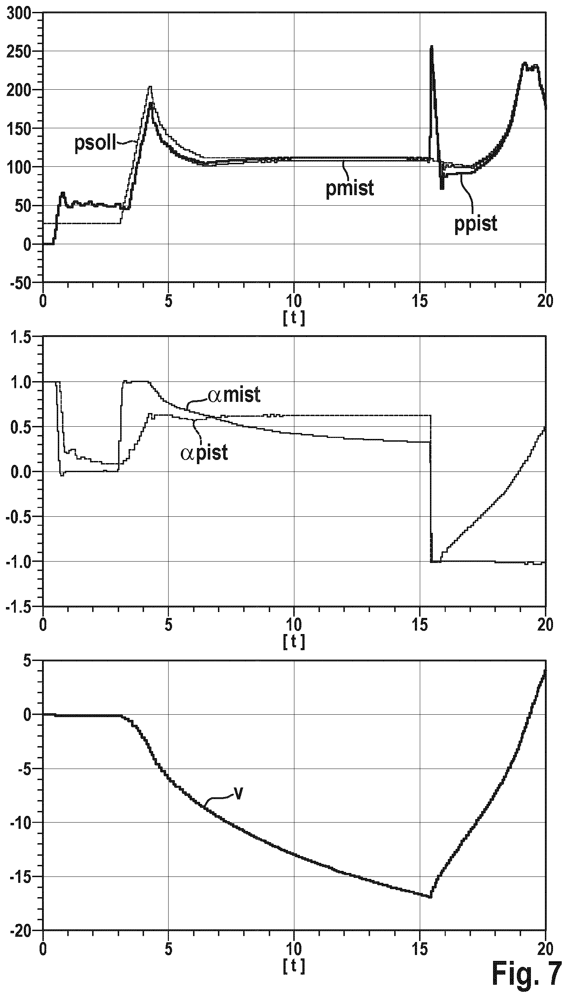

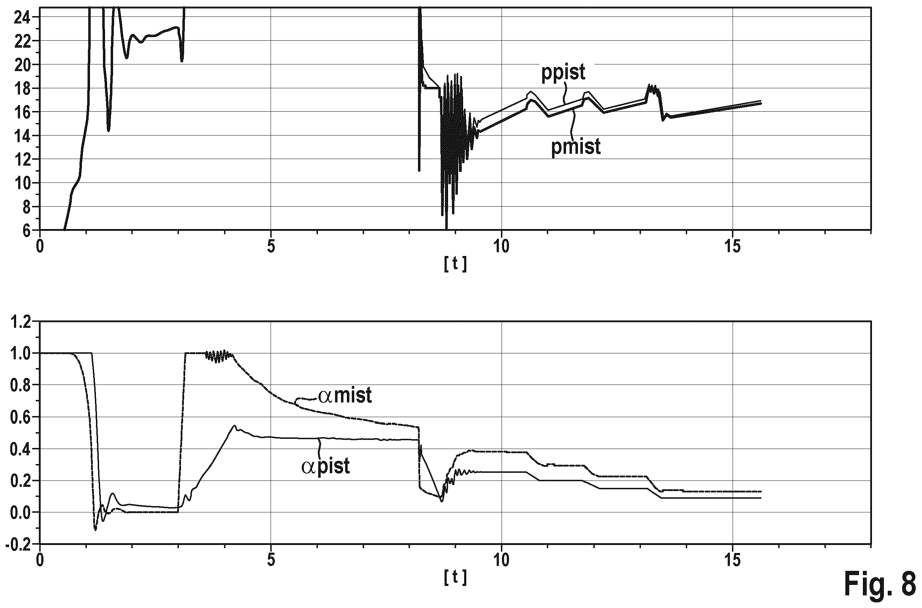

Die nachfolgenden Figuren 7, 8 zeigen den gleichen Fehler - Ausfall der elektrohydraulischen Verstelleinheit 24 des Hydromotors 8 - jedoch in der Rückwärtsfahrt. Figur 7 zeigt das Verhalten eines herkömmlichen Antriebes, Figur 8 stellt hingegen das Verhalten des erfindungsgemäßen Antriebes dar.

Dabei greift gemäß Figur 8 die erfindungsgemäß eingerichtete Steuereinheit 28 noch durch einen zusätzlichen Schritt ein: Dem Herabsetzen des am Druckbegrenzungsventil 16 eingestellten Grenzdrucks auf einen Wert weit unterhalb des bestimmungsmäßen Grenzdrucks, beispielsweise auf 20bar. Der Effekt ist, dass mit geringerem Arbeitsdruck in der Arbeitsleitung 6 die Verstelldynamik des jeweiligen Verdrängungsvolumens Vgm und Vgp, beziehungsweise der Schrägscheiben 34 abnimmt und limitiert wird. Dadurch wird verhindert, dass die Hydromaschinen 4, 8 zu schnell auf die Anschläge
- Vgmax und +Vgmax schwenken, bevor der Antrieb 1 ausgeregelt wird. Ein weiterer Vorteil ist natürlich, dass Überdruck im hydraulischen Kreis vermieden wird und dass durch diese Limitierung der Dynamik ein Sprung im Drehmoment am Abtrieb 14
   begrenzt wird und dadurch kritische Fahrsituationen vermieden werden.

Zusammengefasst wirkt die erfindungsgemäße Steuereinheit wie folgt:
Für den Fehlerfall der abtriebsseitigen Hydromaschine 8 weist die Steuereinheit 28 eine Ersatzregeleinrichtung mit einem Ersatzeingangswert für die antriebsmaschinenseitige Hydromaschine 4 auf, wobei der Ersatzeingangswert dem Ist-Verdrängungsvolumen Vgmist der abtriebsseitigen Hydromaschine 8 entspricht. Der Ersatzeingangswert ist beispielsweise der vom Schwenkwinkelsensor 40 erfasste Ist-Schwenkwinkel αmist der Schrägscheibe oder ein erfasster Stellweg der Verstelleinheit der abtriebsseitigen Hydromaschine 8. Über die Ersatzregeleinrichtung ist dann durch Ansteuerung der elektrohydraulischen Verstelleinheit 24 der antriebsmaschinenseitigen Hydromaschine 4 der Arbeitsruck p der Arbeitsleitung 6 derart regelbar, dass der Ersatzeingangswert (Schwenkwinkel αmist) auf einen Wert folgt, der einem Null-Verdrängungsvolumen Vg0 entspricht, also beispielsweise auf einen Schwenkwinkel αmist von 0°.

Für den Fehlerfall der antriebsmaschinenseitigen Hydromaschine 4 ist eine Regelung des Drucks nicht mehr möglich. Die Steuereinheit 28 weist hierfür eine Ersatzregeleinrichtung mit einem Ersatz-Sollwert für das Verdrängungsvolumen Vgm der abtriebsseitigen Hydromaschine 8 als Ersatzeingangswert auf. Da die elektrohydraulische Verstelleinheit 26 der abtriebsseitigen Hydromaschine 8 nicht-fehlerbehaftet, beziehungsweise intakt und ansteuerbar ist, kann diese direkt mit dem Ersatz-Sollwert, der Vgmsoll = 0 entspricht, angesteuert werden, unabhängig davon, welches Drehmoment angefordert wird. So wird das angeforderte Drehmoment am Abtrieb 14 im genannten Fehlerfall "ignoriert" und stattdessen auf Null geregelt.

Im Fehlerfall der elektrohydraulischen Verstelleinheiten 24, 26 sowohl der antriebsmaschinenseitigen, als der abtriebsseitigen Hydromaschine(n) 4, 8, ist keine Regelung über die elektrohydraulischen Verstelleinheiten 24, 26 mehr möglich. Um kritische Fahrsituationen, kritische Druckspitzen und/oder Kavitation dennoch zu verhindern, ist die Steuereinheit 28 erfindungsgemäß derart eingerichtet, dass sie das Druckbegrenzungsventil 16 so steuert, dass die Druckschwingung durch das Druckbegrenzungsventil 16 im Fahrantrieb stabilisiert wird. Insbesondere werden durch das Druckbegrenzungsventil 16 Druckspitzen vermieden und das Abtriebsmoment begrenzt.

Es ist bekannt, dass für das Triebwerk erforderlich ist, im Motorbetrieb einen Gegendruck auf der Niederdruckseite zu haben, um hohe Drehzahlen fahren zu können. Eine Möglichkeit ist es mit einem Rückschlagventil einen Gegendruck aufzubauen. Jedoch muss im Pumpenbetrieb (Reversieren, Drehmomentumkehr) das Öl möglichst ungedrosselt ansaugen. Daher sollte dieses Element entsperrbar ausgeführt sein um im Pumpenbetrieb beim Ansaugen nicht zu drosseln. Der Erfinder hat ein Bauteil entwickelt, welches auf Basis von einem Steuersignal (elektrisch oder hydraulisch) im Motorbetrieb auf der Niederdruckseite einen Druckabfall erzeugt und im Pumpenbetrieb der abtriebsseitigen Einheit eine ungedrosselte Ansaugung gewährleistet.

Offenbart ist ein hydrostatischer Antrieb mit wenigsten zwei im offenen hydraulischen Kreis angeordneten, mit einem durch Null verstellbaren Verdrängungsvolumen ausgestalteten Hydromaschinen, die zumindest in eine ihrer Verstellrichtungen elektrisch und/oder elektronisch über eine Steuereinheit des Antriebs ansteuerbar sind. Erfindungsgemäß ist die Steuereinheit derart ausgestaltet, dass über sie ein Ausfall der die Verstellung ansteuernden Elektrik und/oder Elektronik erfassbar ist und bei Ausfall die jeweils nicht-fehlerbehaftete, beziehungsweise intakte der Hydromaschinen derart ansteuerbar ist, dass an der den Ausfall aufweisenden Hydromaschine ein Drehmoment gegen null folgt. Auf diese Weise ist eine Beschädigung des Antriebs, der aus dem Ausfall resultieren könnte, verhindert.

Offenbart ist insbesondere ein sekundärgeregelter Fahrantrieb bestehend aus zwei oder mehr durchschwenkbaren Axialkolbenmaschinen in Schrägscheibenbauweise, jeweils mit einem elektrisch/elektronisch ansteuerbaren Ventil einer elektrohydraulischen, an der Schrägscheibe angreifenden Verstelleinheit und einer daran entgegenwirkend angreifenden elektrounabhängigen Verstelleinheit, wobei die Schrägscheiben in stromlosem Zustand und unter Arbeitsdruck von ihrem Maximal-Verdrängungsvolumen zurückschwenken, in stromlosem Zustand und drucklos auf ihr Maximal-Verdrängungsvolumen ausschwenken und sich bei einem niedrigeren Standbydruck ein Gleichgewichts-Verdrängungsvolumen einstellt, wobei mittels einer Sekundärregelung einer Steuereinheit über die mit einer Antriebsmaschine gekoppelte der Axialkolbenmaschinen ein angeforderter Druck einregelbar ist und an der mit einem Abtrieb gekoppelten der Axialkolbenmaschinen, basierend auf einem angeforderten Drehmoment am Abtrieb, ein Schwenkwinkel einregelbar ist. Erfindungsgemäß ist über die Steuereinheit ein elektrischer Fehler an den Axialkolbenmaschinen ermittelbar und in Abhängigkeit davon die bestimmungemäße Regelung in eine Ersatzregelung der nicht fehlerbehafteten, also noch intakten Axialkolbenmaschine oder -maschinen überführbar, und zwar derart, dass kritische Zustände hinsichtlich dem Fahrzustand und Komponentenschäden verhindert sind, insbesondere derart, dass ein momentenfreies Schalten weiterhin möglich ist.

Offenbart ist zudem ein dem gemäßes Verfahren zur Steuerung des Antriebes.

## Patentansprüche

1. Hydrostatischer Antrieb mit Hydromaschinen (4, 8), von denen eine (4) mit einer Antriebsmaschine (2) und eine andere (8) mit einem Abtrieb (14) koppelbar ist, und die einerseits über eine Arbeitsleitung (6) und andererseits mit einer Druckmittelsenke (T) fluidisch verbunden und jeweils mit einem zu Null und beidseitig davon verstellbaren Verdrängungsvolumen (Vgp, Vgm) ausgestaltet sind, wobei die Hydromaschinen zur Verstellung jeweils zumindest eine mit der Arbeitsleitung (6) und mit Niederdruck (T) verbindbare elektrohydraulische Verstelleinheit (24, 26) haben, **dadurch gekennzeichnet, dass** eine Steuereinheit (28) des Antriebs (1) eingerichtet ist, dass über sie fehlerbehaftete der elektrohydraulischen Verstelleinheiten (24, 26) ermittelbar sind und eine nicht-fehlerbehaftete (4, 8) der Hydromaschinen (4, 8) derart ansteuerbar ist, dass ein Drehmoment (M) der Hydromaschine (4, 8) mit fehlerbehafteter elektrohydraulischer Verstelleinheit (24, 26) in Richtung Null folgt.

2. Antrieb nach Anspruch 1, wobei über die Steuereinheit (28) die nicht-fehlerbehaftete (4) der Hydromaschinen (4, 8) derart ansteuerbar ist, dass das Verdrängungsvolumen (Vgm) der Hydromaschine (8) mit fehlerbehafteter elektrohydraulischer Verstelleinheit (26) in Richtung Null (Vg0) folgt.

3. Antrieb nach Anspruch 1 oder 2, wobei die Arbeitsleitung (6) mit einer von der Steuereinheit (28) ansteuerbaren und einstellbaren Druckbegrenzungseinrichtung (16) fluidisch verbunden ist.

4. Antrieb nach Anspruch 3, wobei die Steuereinheit (28) eingerichtet ist, dass über sie, insbesondere im Fehlerfall beider Hydromaschinen (4, 8), ein Grenzdruck der Druckbegrenzungseinrichtung (16) unterhalb eines bestimmungsgemäßen Grenzdrucks einstellbar ist.

5. Antrieb nach einem der vorhergehenden Ansprüche, wobei wenigstens in einem Druckmittelströmungspfad von der anderen Hydromaschine zur Druckmittelsenke eine von der Steuereinheit ansteuerbare Drosseleinrichtung mit verstellbarem Drosselquerschnitt vorgesehen ist.

6. Antrieb nach Anspruch 5, wobei die Steuereinheit eingerichtet ist, dass über sie in einem Motorbetrieb der anderen Hydromaschine der Drosselquerschnitt verringerbar und in einem Pumpenbetrieb demgegenüber vergrößerbar ist.

7. Antrieb nach einem der vorhergehenden Ansprüche, wobei die Steuereinheit (28) eingerichtet ist, dass über sie ein jeweiliger Wechsel der Hydromaschinen (4, 8) vom Motor- in den Pumpenbetrieb und/oder ein Null-Durchgang des Verdrängungsvolumens (Vgp, Vgm) erfassbar und/oder prädizierbar ist.

8. Antrieb nach Anspruch 7, wobei die Steuereinheit (28) eingerichtet ist, dass über sie eine Dynamik des Wechsels und/oder des Null-Durchgangs reduzierbar und/oder begrenzbar ist.

9. Antrieb nach einem der vorhergehenden Ansprüche, wobei die Steuereinheit (28) eingerichtet ist, dass über sie eine Dynamik der Verstellung zumindest derjenigen Hydromaschine (4, 8), die im Pumpenbetrieb ist, reduzier- und/oder begrenzbar ist.

10. Antrieb nach Anspruch 8 oder 9, wobei die Steuereinheit (28) eingerichtet ist, dass über sie die Dynamik in Abhängigkeit einer Drehzahl (n) und/oder des Verdrängungsvolumens (Vgp, Vgm) reduzier- und/oder begrenzbar ist.

11. Verfahren zur Steuerung eines Antriebes, insbesondere Fahrantriebes (1), der Hydromaschinen (4, 8) aufweist, von denen eine (4) mit einer Antriebsmaschine (2) und eine andere (8) mit einem Abtrieb (14) koppelbar ist, und die einerseits über eine Arbeitsleitung (6) und andererseits mit einer Druckmittelsenke (T) fluidisch verbunden und jeweils mit einem zu Null und beidseitig davon verstellbaren Verdrängungsvolumen (Vgp, Vgm) ausgestaltet sind, wobei sie zur Verstellung jeweils eine mit der Arbeitsleitung (6) und mit Niederdruck (T) verbindbare elektrohydraulische Verstelleinheit (24, 26) haben, mit einem Schritt
- Ansteuern der elektrohydraulischen Verstelleinheiten (24, 26) der Hydromaschinen (4, 8), über die Steuereinheit (28),
**gekennzeichnet durch** Schritte
- Ermitteln einer fehlerbehafteten (24, 26) der elektrohydraulischen Verstelleinheiten (24, 26), über die Steuereinheit (28), und
- Ansteuern einer nicht-fehlerbehafteten (26, 24) der elektrohydraulischen Verstelleinheiten (24, 26) über die Steuereinheit (28) derart, dass ein Drehmoment (M) der Hydromaschine (4, 8) mit der fehlerbehafteten elektrohydraulischen Verstelleinheit (24, 26) sinkt, insbesondere auf oder zumindest gegen Null.

12. Verfahren nach Anspruch 11, wobei die Arbeitsleitung (6) mit einer von der Steuereinheit (28) ansteuerbaren und einstellbaren Druckbegrenzungseinrichtung (16) fluidisch verbunden ist, mit einem Schritt
- Ansteuern der Druckbegrenzungseinrichtung (16) über die Steuereinheit (28) derart, dass ein Grenzdruck der Druckbegrenzungseinrichtung (16) auf einen Wert unterhalb eines bestimmungsgemäßen Grenzdrucks eingestellt wird.

13. Verfahren nach Anspruch 12 wobei der Schritt gemäß Anspruch 12 bereits erfolgt, wenn nur eine der elektrohydraulischen Verstelleinheiten (24, 26) fehlerbehaftet ist, oder nur erfolgt, wenn die elektrohydraulischen Verstelleinheiten (24, 26) der einen (4) und der anderen (8) Hydromaschine fehlerbehaftet sind.

## Claims

1. Hydrostatic drive comprising hydraulic machines (4, 8), one (4) of which can be coupled to a drive machine (2) and another (8) of which can be coupled to an output (14) and which are firstly fluidically connected via a working line (6) and secondly are fluidically connected to a pressure medium sink (T) and are each configured with a displacement volume (Vgp, Vgm) which can be adjusted to zero and either side of zero, wherein the hydraulic machines, for adjustment, each have at least one electrohydraulic adjustment unit (24, 26) which can be connected to the working line (6) and to low pressure (T), **characterized in that** a control unit (28) of the drive (1) is designed such that it can be used to determine a faulty electrohydraulic adjustment unit from amongst the electrohydraulic adjustment units (24, 26) and to control a non-faulty hydraulic machine (4, 8) from amongst the hydraulic machines (4, 8) in such a way that a torque (M) of the hydraulic machine (4, 8) with a faulty electrohydraulic adjustment unit (24, 26) tends towards zero.

2. Drive according to Claim 1, wherein the control unit (28) can be used to control the non-faulty hydraulic machine (4) from amongst the hydraulic machines (4, 8) in such a way that the displacement volume (Vgm) of the hydraulic machine (8) with a faulty electrohydraulic adjustment unit (26) tends towards zero (Vg0).

3. Drive according to Claim 1 or 2, wherein the working line (6) is fluidically connected to a pressure limiting device (16) which can be controlled and adjusted by the control unit (28).

4. Drive according to Claim 3, wherein the control unit (28) is designed such that it can be used, in particular in the event of failure of both hydraulic machines (4, 8), to adjust a limit pressure of the pressure limiting device (16) to below a specified limit pressure.

5. Drive according to any of the preceding claims, wherein a throttle device which can be controlled by the control unit with an adjustable throttle cross section is provided at least in a pressure medium flow path from the other hydraulic machine to the pressure medium sink.

6. Drive according to Claim 5, wherein the control unit is designed such that it can be used to reduce the throttle cross section in motor operation of the other hydraulic machine and in contrast to increase the throttle cross section in pump operation.

7. Drive according to any of the preceding claims, wherein the control unit (28) is designed such that it can be used to detect and/or predict a respective changeover of the hydraulic machines (4, 8) from motor to pump operation and/or a zero crossing of the displacement volume (Vgp, Vgm).

8. Drive according to Claim 7, wherein the control unit (28) is designed such that it can be used to reduce and/or limit a dynamic of the changeover and/or the zero crossing.

9. Drive according to any of the preceding claims, wherein the control unit (28) is designed such that it can be used to reduce and/or limit dynamics of the adjustment of at least that hydraulic machine (4, 8) which is in pump operation.

10. Drive according to Claim 8 or 9, wherein the control unit (28) is designed such that it can be used to reduce and/or limit the dynamics as a function of a speed (n) and/or the displacement volume (Vgp, Vgm).

11. Method for controlling a drive, in particular a traction drive (1), of the hydraulic machines (4, 8), one (4) of which can be coupled to a drive machine (2) and another (8) of which can be coupled to an output (14) and which are firstly fluidically connected via a working line (6) and secondly are fluidically connected to a pressure medium sink (T) and are each configured with a displacement volume (Vgp, Vgm) which can be adjusted to zero and either side of zero, wherein the hydraulic machines, for adjustment, each have an electrohydraulic adjustment unit (24, 26) which can be connected to the working line (6) and to low pressure (T), comprising a step of
- controlling the electrohydraulic adjustment units (24, 26) of the hydraulic machines (4, 8) via the control unit (28),
**characterized by** steps of
- determining a faulty electrohydraulic adjustment unit (24, 26) from amongst the electrohydraulic adjustment units (24, 26) via the control unit (28), and
- controlling a non-faulty electrohydraulic adjustment unit (26, 24) from amongst the electrohydraulic adjustment units (24, 26) via the control unit (28) in such a way that a torque (M) of the hydraulic machine (4, 8) with the faulty electrohydraulic adjustment unit (24, 26) drops, in particular to or at least towards zero.

12. Method according to Claim 11, wherein the working line (6) is fluidically connected to a pressure limiting device (16) which can be controlled and adjusted by the control unit (28), comprising a step of
- controlling the pressure limiting device (16) via the control unit (28) in such a way that a limit pressure of the pressure limiting device (16) is adjusted to a value below a specified limit pressure.

13. Method according to Claim 12, wherein the step according to Claim 12 is already carried out when only one of the electrohydraulic adjustment units (24, 26) is faulty, or is carried out only when the electrohydraulic adjustment units (24, 26) of one (4) and the other (8) hydraulic machine are faulty.

## Revendications

1. Entraînement hydrostatique avec des machines hydrauliques (4, 8), dont une (4) peut être couplée à une machine d'entraînement (2) et une autre (8) peut être couplée à une sortie (14), et qui sont reliées fluidiquement d'une part par une conduite de travail (6) et d'autre part à un puits de milieu sous pression (T) et sont configurées chacune avec un volume de refoulement (Vgp, Vgm) pouvant être ajusté à zéro et sur des valeurs à gauche et à droite de zéro, les machines hydrauliques ayant pour l'ajustement chacune au moins une unité d'ajustement électrohydraulique (24, 26) pouvant être reliée à la conduite de travail (6) et à une basse pression (T), **caractérisé en ce qu'**une unité de commande (28) de l'entraînement (1) est mise au point pour pouvoir déterminer des unités d'ajustement électrohydrauliques défectueuses des unités d'ajustement électrohydraulique (24, 26) et pour pouvoir piloter une machine hydraulique non défectueuse (4, 8) des machines hydrauliques (4, 8) de telle manière que s'ensuit un couple de rotation (M) de la machine hydraulique (4, 8) avec une unité d'ajustement électrohydraulique (24, 26) défectueuse tendant vers zéro.

2. Entraînement selon la revendication 1, l'unité de commande (28) permettant de piloter la machine hydraulique (4) non défectueuse des machines hydrauliques (4, 8) de telle manière que s'ensuit le volume de refoulement (Vgm) de la machine hydraulique (8) avec une unité d'ajustement (26) électrohydraulique défectueuse tendant vers zéro (Vg0).

3. Entraînement selon la revendication 1 ou 2, la conduite de travail (6) étant reliée fluidiquement à un dispositif de limitation de pression (16) pouvant être piloté par l'unité de commande (28) et pouvant être réglé.

4. Entraînement selon la revendication 3, l'unité de commande (28) étant mise au point pour permettre de régler en cas de panne des deux machines hydrauliques (4, 8) une pression limite du dispositif de limitation de pression (16) en dessous d'une pression limite conforme à l'usage prévu.

5. Entraînement selon l'une des revendications précédentes, un dispositif d'étranglement, pouvant être piloté par l'unité de commande, avec une section transversale d'étranglement ajustable étant prévu au moins sur un trajet d'écoulement de milieu sous pression depuis l'autre machine hydraulique vers le puits de milieu sous pression.

6. Entraînement selon la revendication 5, l'unité de commande étant mise au point pour permettre de réduire la section transversale d'étranglement lors d'un fonctionnement en mode moteur de l'autre machine hydraulique, et, en revanche, de l'agrandir lors d'un fonctionnement en mode pompe.

7. Entraînement selon l'une des revendications précédentes, l'unité de commande (28) étant mise au point pour permettre de détecter et/ou de prédire un changement respectif des machines hydrauliques (4, 8) du fonctionnement en mode moteur au fonctionnement en mode pompe et/ou un passage à zéro du volume de refoulement (Vgp, Vgm).

8. Entraînement selon la revendication 7, l'unité de commande (28) étant mise au point pour permettre de réduire et/ou de limiter une dynamique du changement et/ou du passage à zéro.

9. Entraînement selon l'une des revendications précédentes, l'unité de commande (28) étant mise au point pour permettre de réduire et/ou de limiter une dynamique de l'ajustement d'au moins de cette machine hydraulique (4, 8) qui est dans le fonctionnement en mode pompe.

10. Entraînement selon la revendication 8 ou 9, l'unité de commande (28) étant mise au point pour permettre de réduire et/ou de limiter la dynamique en fonction d'une vitesse de rotation (n) et/ou du volume de refoulement (Vgp, Vgm).

11. Procédé de commande d'un entraînement, en particulier d'un entraînement de déplacement (1), des machines hydrauliques (4, 8), dont une (4) peut être couplée à une machine d'entraînement (2) et une autre (8) peut être couplée à une sortie (14), et qui sont reliées fluidiquement d'une part par une conduite de travail (6) et d'autre part à un puits de milieu sous pression (T) et sont configurées chacune avec un volume de refoulement (Vgp, Vgm) pouvant être ajusté sur zéro et des deux côtés de zéro, les machines hydrauliques ayant chacune pour l'ajustement une unité d'ajustement électrohydraulique (24, 26) pouvant être reliée à la conduite de travail (6) et à une basse pression (T), avec une étape de
- pilotage des unités d'ajustement électrohydrauliques (24, 26) des machines hydrauliques (4, 8) par l'unité de commande (28),
**caractérisé par** les étapes de
- détermination d'une unité d'ajustement (24, 26) défectueuse des unités d'ajustement électrohydrauliques (24, 26) par l'unité de commande (28), et
- pilotage d'une unité d'ajustement électrohydraulique (26, 24) non défectueuse des unités d'ajustement électrohydrauliques (24, 26) par l'unité de commande (28) de telle manière qu'un couple de rotation (M) de la machine hydraulique (4, 8) avec l'unité d'ajustement électrohydraulique (24, 26) défectueuse baisse, en particulier à zéro ou du moins vers zéro.

12. Procédé selon la revendication 11, la conduite de travail (6) étant reliée fluidiquement à un dispositif de limitation de pression (16) pouvant être piloté par l'unité de commande (28) et pouvant être réglé, avec une étape de
- pilotage du dispositif de limitation de pression (16) par l'unité de commande (28) de telle manière qu'une pression limite du dispositif de limitation de pression (16) est réglée sur une valeur inférieure à une pression limite conforme à l'usage prévu.

13. Procédé selon la revendication 12, l'étape selon la revendication 12 étant déjà effectuée lorsqu'une seule des unités d'ajustement électrohydrauliques (24, 26) est défectueuse, ou étant effectuée seulement lorsque les unités d'ajustement électrohydrauliques (24, 26) d'une (4) ou de l'autre (8) machine hydraulique sont défectueuses.
